# EUROPEAN PATENT SPECIFICATION

(11) **EP 4 347 525 B1**
(45) Date of publication and mention of the grant of the patent: **09.07.2025**
(21) Application number: 22727837.1
(22) Date of filing: 04.05.2022
(51) Int. Cl.: C04B 18/16, C04B 22/10, C04B 28/04, C04B 14/26, C04B 28/06

(54) **METHOD FOR PRODUCING SUPPLEMENTARY CEMENTITIOUS MATERIAL**
VERFAHREN ZUR HERSTELLUNG VON KLINKERERSATZMATERIAL
PROCÉDÉ DE PRODUCTION DE MATÉRIAU CIMENTAIRE SUPPLÉMENTAIRE

(30) Priority: 26.05.2021 EP 21176008
(43) Date of publication of application: 10.04.2024
(73) Proprietor: Heidelberg Materials AG, 69120 Heidelberg (DE)
(72) Inventor: ZAJAC, Maciej, 69120 Heidelberg (DE); SKOCEK, Jan, 69120 Heidelberg (DE); BULLERJAHN, Frank, 69120 Heidelberg (DE); BOLTE, Gerd, 69120 Heidelberg (DE)
(74) Representative: Zellentin & Partner mbB Patentanwälte
(86) International application number: PCT/EP2022/061984
(87) International publication number: WO 2022/248179

(56) References cited:
- EP-A1- 3 498 681
- EP-A1- 3 744 700
- EP-A2- 3 656 750

## Description

The present invention relates to a method for producing a supplementary cementitious material from concrete waste and similar materials. Further, the invention relates to the supplementary cementitious material obtainable by the method according to the invention. The invention also relates to the use of the supplementary cementitious material for making hydraulic building materials. Moreover, the invention relates to a hydraulic binder comprising the supplementary cementitious material and the use of the hydraulic binder.

Cement industry is struggling with the high CO₂ emissions related to the production of cement clinker. The easiest way to limit this environmental footprint is to produce composite cements or to increase the usage of supplementary cementitious material during the concrete production. Unfortunately, the increase of the proportion of the composite cements in the product portfolio is limited by the availability of high quality supplementary cementitious material, i.e. reactive materials resulting in appreciable strength evolution.

Utilization of recycled concrete components helps to achieve better sustainability and to conserve the resources of natural aggregate and clinker raw materials. Carbonation of recycled concrete has not only potential to bind a significant amount of CO₂ but can also improve the properties of the recycled concrete fines and aggregates allowing to re-use them directly in the concrete production. For example EP 3 778 525 A1, EP 3 744 700 A1 and the prior art cited therein report that carbonation of the fines from recycled concrete provides a useful supplementary cementitious material (abbreviated SCM herein). However, the application of recycled concrete, particularly of recycled concrete paste (in the following RCP), is limited because it has partly unsuitable properties. The industrially available recycled concrete paste comes as mixture with significant amounts of aggregates that are inert materials in the sense of being non-carbonatable and not (latent-)hydraulic/pozzolanic materials. Consequently, the presence of aggregates dilutes the cement paste content, which results in a decrease of the compressive strength of the composite cements containing carbonated RCP. Further, in relation to the CO₂ saved it makes the overall approach less efficient and more expensive.

There are proposals for a more efficient separation of RCP and aggregate, such as US 2015/0210594 A1, US 2016/0046532 A1, and EP 3 744 700 A1, describing that grinding in the presence of carbon dioxide results in more efficient detaching of RCP from aggregate. The detached fines are separated from the aggregate and said to be useful for composite cements. Nothing is reported about the possible reactivity or activation of the aggregates fraction.

EP 2 878 585 A1 describes a method for manufacturing a C-S-H seed by hydrothermal activation of industrial waste and by-products. The following materials are listed as potential sources of industrial wastes and by-products: fly ash, silica fume, ground granulated blast furnace slag, salt slag and acetylene lime slurry. Moreover, the described method relates to a hydrothermal activation with an obligatory use of doping agents selected from B, P and S in order to generate the required calcium silicate hydrate. Neither the hydrothermal activation of the aggregates fraction nor the carbonation of the hydrothermally activated material is described.

WO 2014/183846 A1 describes a method for enhancing the latent hydraulic and/or pozzolanic reactivity of materials comprising sources for CaO and SiO₂ and Al₂O₃ by mixing this material with water and treating the mixture hydrothermally in an autoclave at 100 °C to 300 °C for 0.1 to 24 hour, preferably tempering the autoclaved product at 350 to 600 °C, wherein the heating rate ranges from 10 to 6000 °C/minute and the residence time ranges from 0.01 to 600 minutes, in order to obtain supplementary cementitious material with enhanced reactivity.

WO 2017/005350 A1 describes a method for binding carbon dioxide, comprising: providing a starting material which comprises sources for CaO and SiO₂ and optionally also Al, Fe and/or Mg, hydrothermally treating the starting material in an autoclave, the thermal activation of the material by tempering in in the range of 350-600 °C and hardening the resulting material with carbon dioxide. However, the carbonated product is the final building element. Neither the hydrothermal activation of the aggregates fraction nor the use of the carbonated product as SCM is revealed.

EP 3 498 681 A1 describes a method for manufacturing a supplementary cementitious material from recycled concrete fines as a starting material. The carbonated starting material results in agglomerates, which are to deagglomerated in a next step. In contrast to the present invention EP 3 498 681 A1 suggests carbonating the recycled concrete fines directly. According to the invention a hydrothermal treatment takes place in order to obtain a hydrothermally activated material.

EP 3 656 750 A2 describes a concept for utilization of carbon dioxide, inter alia carbonation of recycled concrete is suggested. As mentioned above hydrothermal treatment for providing a hydrothermally activated starting material for carbonation is not mentioned in this document.

Thus, there is still a need for providing reactive SCM and more efficient ways to recycle waste concrete, especially concrete demolition waste. Accordingly, it is an object of the invention to overcome the afore-mentioned disadvantages. In particular, it is an object of the invention to provide a method, wherein waste concrete is converted into a reactive SCM.

Surprisingly it was now found that a combination of hydrothermal treatment and carbonation allows enhancing and accelerating of the carbonation of recycled waste concrete to increase its CO₂ uptake and activating also parts of the contained aggregates to become reactive as SCM in the case of silicate and/or alumino-silicate containing aggregate.

Thus, the mentioned problem is solved by a method comprising hydrothermal treatment of concrete waste and subsequent carbonation of the hydrothermally activated material. Specifically, the invention relates to a method for producing a supplementary cementitious material comprising the steps as defined in claim 1. Further, the invention relates to a supplementary cementitious material obtainable by the method according to the invention. Moreover, the invention relates to the use of the supplementary cementitious material according to the invention for making hydraulic building materials. The invention also relates to a hydraulic binder comprising the supplementary cementitious material according to the invention and to the use of the hydraulic binder according to the invention for making hydraulic building materials.

It is possible to adjust the fineness of the aggregates in order to maximise the aggregate conversion. The CO₂ sequestered by the carbonation balances the emission associated with limestone calcination during the cement production. Moreover, the need for complex equipment and the energy intensive separation of different material types of the recycled concrete becomes obsolete. The method according to the invention also has at least one of the following further advantages:
- Significant potential for the sequestration of CO₂, e.g. CO₂ sequestration from e.g. the exhaust gas of cement and power plants.
- A contribution is made to the circular economy.
- The environmental footprint of the cement industry is reduced.
- Hydrothermal activation of sand and aggregates present in recycled concrete by the conversion into new reactive and/or carbonatable phases.
- The pozzolanic reactivity of the carbonated material is improved.
- A high clinker replacement ratio and an extension of the composite cement production rate are obtained using the product as cement constituent.

To simplify the description the following abbreviations that are usual in the field of cement are used herein: H - H₂O, C - CaO, A - Al₂O₃, F - Fe₂O₃, M - MgO, N - Na₂O, K - K₂O, S - SiO₂ and $ - SOs. Compounds are mostly named by the pure form, without explicit mentioning of solid solutions, foreign ion substitution and impurities etc. as are usual in technical and industrial materials. As is known to the man skilled in the art knows, the exact composition of the phases described may vary due to substitution with foreign ions. Such compounds are comprised herein when mentioning the pure form unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

In the context of the invention cement is used to designate a material that, after mixing with water to form a paste, is able to develop mechanical strength by hydraulic reaction. Thus, cement denotes a ground clinker or analogous hydraulic phases obtained by other routes, like dicalcium silicate cement obtained by hydrothermal treatment. Binder or binder mixture means a material or mixture containing cement and developing mechanical strength by a hydraulic reaction with water, wherein the binder typically but not necessarily contains more components than the cement. Thus, geopolymer binder, super sulphated cement and composite cements are termed binder herein. A binder is used adding water or another liquid and mostly also aggregates as well as optionally admixtures and/or additives, to provide a paste that hardens resulting in a building element. Therefore, paste herein means a mixture of binder with water, especially but not limited to concrete and mortar.

A supplementary cementitious material (SCM) is herein defined as a pozzolanic and/or latent hydraulic material useful to replace a part of the cement in a binder or in a hydraulically hardening building material. Latent hydraulic materials have a composition that allows hydraulic reaction upon contact with water, wherein typically an activator is needed to enable hardening within technically feasible times. Activator means a substance that accelerates the hardening of latent hydraulic materials. It can be an additive like a sulfate or calcium (hydr)oxide and/or products of the hydraulic reaction of the ground clinker, e.g. calcium silicates that liberate calcium hydroxide during hydration. Pozzolanic materials are typically characterized by a content of reactive silica and/or alumina which form strength providing calcium silicate hydrates and calcium aluminate hydrates, respectively, during hydration of the clinker together with the calcium hydroxides liberated. These materials may contain reactive magnesium and iron and other reactive elements. In practice the boundary between latent hydraulic and pozzolanic materials is not clearly defined, for example fly ashes can be both, latent hydraulic and pozzolanic, depending on their calcium oxide content. Consequently, the term SCM designates both, latent hydraulic as well as pozzolanic materials. However, not reactive or only slightly reactive materials like limestone that substantially do not take part in the hydraulic reaction have to be clearly differentiated from SCM, with which they are sometimes summarized as mineral additions.

Hydraulically hardening building material means a wet mixture that is able to harden hydraulically, and comprises a cement or binder as well as optionally any other additives and/or admixtures contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material.

According to the invention a reactive SCM is obtained by autoclaving and carbonation of a starting material containing hydrated cement and aggregate. Other waste material, which is characterized by an analogous chemical/mineralogical composition, can be included into the starting material. Thus, in the method for producing a reactive supplementary cementitious material a starting material comprising hydrated cement and aggregate comprising silicate and/or alumino-silicate is provided in step i). A preferred starting material is based on waste concrete, while different types of slags, fly ashes, red mud, waste glass and/or natural materials such as volcanic pozzolan or calcined clay can be added, most preferred the starting material is waste concrete.

In one embodiment, the waste concrete is derived from demolished hardened building materials, especially from demolished concrete structures like buildings, bridges, road surfaces etc. As is known per se, the concrete demolition waste is crushed and possibly ground. If needed foreign materials like wood, plastic and metal are removed, at least most of them. The crushed and optionally ground material is then usually separated based on size into recycled concrete aggregate (RCA) and recycled concrete fines (RCF). RCA is the coarser fraction and contains most of the aggregate, RCF contains mainly the hardened paste and varying amounts of the fine aggregate. Depending on the separation method and conditions applied, the hardened paste can be detached more or less from the aggregate during providing of the RCA and RCF. Both finer crushing, optionally grinding, as well as applying attrition force in a carbon dioxide containing atmosphere can enhance detaching the paste from the aggregate. Thus, it is envisaged that aggregate with varying sizes can also be provided more or less free from RCP, such materials are not suitable as starting material on their own. RCF containing both RCP and aggregate (usually mainly sand) is a preferred starting material and can often be used as is.

In another embodiment the waste concrete material is derived from residues from concreting and/or from cleaning concreting equipment. Concrete and also mortar are frequently made in larger amounts than needed to avoid having not enough for a given building step. Also, it occurs that delays are so long that a batch of concrete or mortar cannot be used as planned and has to be discarded. Further, mixing devices, tools, moulds, etc. having been used to make and/or place the paste have to be cleaned which is usually accomplished by rinsing with water. Thereby, residues containing hardened paste and varying amounts of water are obtained. Solid residues can be utilized in the same way as concrete demolition waste, i.e. crushed and/or ground, possibly in the presence of carbon dioxide, to obtain RCF. Liquid residues typically need to be concentrated in solids, maybe dried, to obtain an RCF slurry or dry RCF. The aggregate content in liquid residues is normally low, typically only fine aggregate is present, if at all. Suitable devices to remove water are e.g. filters.

The waste concrete material can also be a mixture of materials, especially of the described materials.

The cement having been used to make the hydraulically hardening building material from which the hardened building material derives, e.g. concrete or mortar, can be any cement or binder, preferred and most common are standard cements as defined in e.g. DIN EN 197-1. However, other cements like calcium aluminate cements, calcium sulfoaluminate cements, dicalcium silicate cements obtained from hydrothermal treatment and tempering or reactive grinding, and binders like geopolymer binders, super sulphated cements, and other special binders are equally possible. The important component for the starting material is hydrated cement, i.e. calcium in the form of silicate and/or aluminate hydrates.

When cement or binders harden with water (hydration), a hydrated cement results and on the one hand calcium silicate hydrate phases, abbreviated C-S-H, and/or calcium aluminate hydrate phases grow, and on the other hand portlandite, abbreviated CH (Ca(OH)₂), is formed. C-S-H has a very variable composition. Calcium aluminate hydrate phases are for example, but not exclusively, mono sulfate, abbreviated AFm, and ettringite. Also phases containing both silicate and aluminate hydrate can form. Portlandite is a rare mineral, so named because of its similarity to Portland cement. It forms along with C-S-H from excess calcium in the cement phases.

Likewise, the aggregate having been used to make the hardened building material can be any aggregate known as such. Aggregates are inert granular materials that, along with water and cement or binder are an essential ingredient in concrete. The term aggregate covers a broad category from coarse- to medium- and fine-grained particulate material, including sand, gravel, crushed stone, slag and geosynthetic aggregates. Generally, aggregate serves as reinforcement to add strength to the overall hardened building material.

Sand is a granular material composed of finely divided rock and mineral particles. Sand comprises silica (silicon dioxide, or SiO₂), for example in the form of quartz, and/or calcium carbonate (CaCO₃), for example in the form of aragonite. Usually, particle sizes range from 0.01 mm to 2 mm or 4 mm.

Crushed stone or angular rock is typically produced by mining a suitable rock deposit and breaking the removed rock down to the desired size using crushers. It is distinct from natural sand and gravel which are produced by processes of weathering and erosion and typically have a more rounded shape.

Gravel is a loose aggregation of rock fragments. Gravel is classified by particle size range and includes size classes from granule- to boulder-sized fragments. DIN EN 12620 grades aggregates as fine (< 4 mm, sand), and coarse (> 4 mm, gravel). One cubic metre of loose gravel typically weighs about 1800 kg.

The use of industrial by-products such as steel slags or air-cooled blast furnace slags as aggregate becomes more common. Those can also be converted to reactive components in accordance to the present invention.

Often used aggregates are quartz sand and gravel, and further sand, gravel and crushed aggregate from basalt, granite, limestone, olivine, and skarn. Most aggregates comprise crystalline or amorphous silicates, alumino-silicates, iron-silicate sand mixtures and solid-solutions thereof as these minerals are abundant and of good technical properties. Basalt is a mafic extrusive igneous rock formed from the rapid cooling of lava rich in magnesium, iron and optionally alumina. It contains mainly Feldspars, Augite and Forsterite minerals. Feldspars (KAISi₃O - NaAlSi₃O₈ - CaAl₂Si₂O₈) are a group of rock-forming tectosilicate minerals. Augite is a pyroxene mineral with formula (Ca,Na)(Mg,Fe,Al,Ti)(Si,Al)₂O₆. Forsterite is Mg₂SiO₄. It is also known as the magnesium-rich end-member of the olivine (in addition to Fayalite, the Fe-rich end-member). Granite is a coarse-grained igneous rock composed mostly of Quartz, alkali Feldspar, and Plagioclase. It is formed from magma with a high content of silica and alkali metal oxides that slowly solidifies underground. Granite contains Feldspar, Muscovite and Quartz. Muscovite is a hydrated phyllosilicate mineral of aluminium and potassium with formula KAl₂(AlSi₃O₁₀)(F,OH)₂. Olivine is a magnesium iron silicate that contains mainly Forsterite and Fayalite as well as several solid-solutions. Skarn is fine to coarse-grained metamorphic rock formed in the contact area around silicon, aluminum, iron rich igneous rock intrusions in carbonate (sedimentary) rocks or by intrusions of aggressive, hydrothermal solutions into carbonate (sedimentary) rocks. Skarn contains various minerals such as but not limited to wollastonite (CaSiOs), pyroxene, garnet, calcium-rich silicates. Generally, all silicate, alumino(iron)-silicates bearing rock types such as igneous, sedimentary and metamorphic rocks are suitable aggregate for conversion into SCM according to the invention. Contrary, limestone or dolomite sand and aggregates usually contain non-carbonatable calcite or dolomite as the main crystalline phase and consequently they are mostly not reactive at the conditions considered. These are not suitable or useful but a not too big amount, e.g. not more than 50 % by weight of the aggregate, preferably not more than 30 % by weight, of them can be tolerated.

In a preferred embodiment the aggregate is quartz, basalt, granite, olivine, skarn and mixtures thereof and/or the aggregate comprises crystalline or amorphous silicates, alumino-silicates and mixtures thereof.

Preferably, the starting material provided in step i) has a particle size distribution with a D₉₀ of ≤ 500 µm, more preferably ≤ 200 µm, especially preferred ≤ 100 µm, determined by laser granulometry. The material provided in step i) as defined above preferably has a particle size distribution with a D₉₀ from 10 µm to 500 µm, more preferably from 10 µm to 200 µm, especially from 25 µm to 90 µm. In a preferred embodiment, the material provided in step i) has a Rosin-Rammler slope n in the range from 0.6 to 1.4, especially from 0.7 to 1.2. If the particle size distribution of the material used to provide the starting material in step i) is not as desired, the material is ground or crushed and ground to provide the starting material. Crushing and/or grinding is carried out with devices and methods well known to one skilled in the art.

In step ii) the starting material provided in step i) is hydrothermally treated, i.e. heated in the presence of water, to obtain a hydrothermally activated material. If the starting material is dry or does not contain enough water, water is added to the material obtained in step i) so that an aqueous mixture is obtained. The water-solid weight ratio in the aqueous mixture is equal to or larger than 0.1. Preferably, the water-solid ratio is in the range from 0.25 to 4 and more preferred from 0.3 to 2.0. The amount of water is adjusted such that a full hydration of the solids can be achieved.

Optionally, the aqueous mixture additionally comprises an agent which accelerates the hydrothermal treatment step ii) and/or the subsequent carbonation step iii) and/or improves/adjusts the properties of the composite cement made from the SCM.

Suitable agents, which accelerate the hydrothermal treatment step ii) are selected from alkaline and/or earth alkaline salts and/or hydroxides, for example, but not exclusively, CaSO₄•2H₂O, CaSO₄•½H₂O, CaSO₄, CaHPO₂•2H₂O, Ca₃P₂O₈, NaOH, KOH, Na₂CO₃, NaHCOs, K₂CO₃, MgCOs, MgSO₄, Na₂Al₂O₄, Na₃PO₄, K₃PO₄, Na₂[B₄O₅(OH)₄]•8H₂O, CaCl₂, Ca(NO₃)₂, MgCl₂, Mg(NO₃)₂, AlCl₃, Al(NO₃)₃, FeCl₃, Fe(NO₃)₃, Ca(CH₃COO)₂, Mg(CH₃COO)₂, Al(CH₃COO)₃, Ca(HCOO)₂, Mg(HCOO)₂, Al(HCOO)₃, and mixtures of two or more of them.

Suitable agents, which accelerate the carbonation step ii) are selected from sulfates, e.g. alkali and/or earth alkali sulfates, aqueous solvents like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof, halogenides, ethylenediaminetetraacetic acid (EDTA) or other substances that improve dissolving of CO₂ in the solution. Additionally, enzymes such as carbonic anhydrase can be used to enhance carbonation efficiency.

Agents improving or adjusting properties of the composite cement are admixtures and possibly additives. Both are known for use in cement and concrete and will be described later.

The aqueous mixture of the starting material comprising hydrated cement and aggregate is subjected to a hydrothermal treatment. The hydrothermal treatment in step ii) can be carried out in any conventional device, such as an autoclave. The temperature during the hydrothermal treatment is usually set in the range from 25 to 400 °C, preferably in the range from 75 to 350 °C. According to a particularly preferred embodiment the temperature is in the range from 75 or 100 to 300 °C or 250 °C.

The pressure during the hydrothermal treatment is preferably endogenous, i.e. the pressure that sets itself during the treatment at the selected temperature. It can also be kept constant. Typically the pressure is in the range from 1 to 25 bar, preferably from 2 to 20 bar. All pressures indicated herein are absolute pressures.

It is possible to carry out the hydrothermal treatment in step ii) under stirring and/or grinding to prevent settling of the solids and/or to provide fresh, non-reacted surface area.

The treatment can last from minutes to hours depending on the specific starting materials, the pressure, the temperature and the agent, if one is added. Typically the treatment time may vary from 30 minutes to 48 hours. According to a particular embodiment, it is in the range from 2 to 36 hours.

The hydrothermal treatment in step ii) is generally carried out with no addition of carbon dioxide. In particular, the hydrothermal treatment in step ii) is carried out with a carbon dioxide concentration of not more than 1 Vol.-% or up to 0.1 bar. Preferably, only the carbon dioxide introduced by contact with air and dissolved in water by this is conained. Calcium carbonate added in the form of limestone is essentially unreactive during the hydrothermal treatment. Consequently, it stays unchanged and is not an addition of carbon dioxide.

In step ii) a hydrothermally activated material is obtained. Usually, this contains calcium silicate hydrates or calcium aluminate hydrates, and optionally calcium aluminium silicate hydrate or magnesium silicate hydrate or calcium magnesium silicate hydrate or magnesium (aluminium, iron) silicate hydrate or magnesium (calcium, aluminium, iron) silicate, hydrotalcite like phases and other compounds. Elements listed in brackets are an abbreviation for compounds in which they or one or more of them if more than one is listed can but need not be present. The autoclaved product contains at least one, usually several of the mentioned calcium and/or magnesium silicate or aluminate hydrates, typically:
- 0.01 to 80 % by weight α-C₂SH, differing C-S-H forms including dellaite and partially carbonated C-S-H phases as well as amorphous and ill crystalline phases thereof
- 0.01 to 80 % by weight katoite, Si-katoite, Fe-katoite, also as mono- and semi carbonate as well as amorphous and ill crystalline phases thereof
- 0.01 to 80 % by weight magnesium (calcium, aluminium, iron) silicates or silicate hydrates as well as amorphous and ill crystalline phases thereof
- 0.01 to 80 % by weight aluminium and/or iron silicates and silicate hydrates as well as amorphous and ill crystalline phases thereof
- traces and secondary components such as alumina, iron oxide (hematite, magnetite) and aluminium or iron hydroxides, C₂AS, Ca(OH)₂, MgCOs, Mg(OH)₂, quartz, cristobalite, anhydrite and calcite, unreacted fraction of the starting cement, partially hydrated cement paste and aggregates.

Generally, the amorphous and ill crystalline phases are a precursor of the crystalline phases, for example calcium silicates (belite), calcium aluminates (mono calcium aluminates, mayenite), magnesium (aluminium, iron) silicates (serpentine, talc), and so on, which have no or only a low atomic (short-range) order. This is reflected in a lack of forming X-ray reflexes or the formation of very much broadened reflexes with low intensity.

Surprisingly, also the aggregate is at least partially activated during the hydrothermal treatment, so that the hydrothermally activated material contains more carbonatable hydrate phases than the amount of RCP that was present in the starting material. Activation means the change of silicates, aluminates and alumino silicates into the calcium silicate hydrates, calcium aluminate hydrates and calcium aluminium silicate hydrates. The first ones are non-reactive with respect to CO₂ while the activated ones are reactive under the conditions according to the invention.

As next step the hydrothermally activated material obtained in step ii) is carbonated. Carbonation is a chemical reaction in which carbon dioxide, CO₂, is bound to a substance. The terms carbonation and carbonatization are used synonymously.

The carbonation can take place in a dry or in a wet process in the presence of a solvent, wherein preferably the solvent is water. If carbonation is not carried out as a wet process or the solvent has not enough water, sufficient water is provided to allow the dissolution-precipitation reactions. Thus, in a dry process a relative humidity (RH) of at least 50 % is set, preferably from 55 to 99 % and most preferred from 80 to 99 %.

The carbonation can be carried out at a discrete temperature and discrete pressure. Alternatively, the carbonation can be carried out in a ramp mode, whereby the reaction temperature and/or the CO₂ pressure at which the reaction mixture is converted increases over time.

In a first embodiment, the carbonation reaction takes place in only one reactor, whereby the reaction temperature and/or the CO₂ pressure are increased continuously or in several steps (incremental), e.g. in 2, 3, 4 or more steps. Alternatively, the reaction can take place in a cascade of 2 or more reactors connected in series. In this case, in the direction of flow of the reaction mixture, at least one downstream (further) reactor has a higher reaction temperature and/or a higher CO₂ pressure than an upstream (previous) reactor. In a special design, each downstream reactor has a higher reaction temperature and/or a higher CO₂ pressure than the previous reactor.

Alternatively or additionally, when operating in one reactor as well as in several reactors, each reactor may have two or more reaction zones. In this case, each of the reactors may have two or more reaction zones with different temperature and/or CO₂ pressure. For example, a different temperature, preferably a higher temperature than in the first reaction zone, can be set in a second reaction zone, or a higher temperature than in a preceding reaction zone can be set in each subsequent reaction zone. Furthermore, for example, in a second reaction zone a different, preferably a higher pressure than in the first reaction zone, or in each subsequent reaction zone a higher pressure than in a preceding reaction zone, can be set.

The carbon dioxide for use in the method according to the invention can be used in gaseous, liquid, solid or supercritical form. It is also possible to use carbon dioxide-comprising gas mixtures available on an industrial scale. The CO₂ used for the carbonation can be used in pure form or in the form of mixtures with other gases, such as oxygen or inert gases like nitrogen or argon. Preference is given to using CO₂ in undiluted form. The CO₂ can be applied discontinuously or continuously, e.g. by bubbling CO₂ gas through the reaction mixture.

In another embodiment the source of CO₂ comes from exhaust gases having a high CO₂ content, preferably exhaust gases, wherein the CO₂ concentration is between 10 to 30 %, based on the total volume of the exhaust gas. Preferred are exhaust gases from cement plants, coal fired power plants or waste incinerators.

Before carbonation, the hydrothermally activated material can be cooled down, the resulting slurry filtered and dried at a temperature ≤ 125 °C providing the hydrothermally activated material in a form in which it can be stored for an unlimited time. Alternatively, the carbonation step iii) is conducted directly following step ii) without isolation of the hydrothermally activated material. Some water may be removed from the product of step ii) in this case, e.g. by filtering. Preferably, the carbonation step iii) is conducted directly after step ii) in the same device.

It is further possible, that the material is ground during or in-between any of the steps i) and ii) prior to carbonation and/or during the carbonation iii). Finer particle sizes are preferable since mostly the conversion of finer particles is faster. There is more surface available for conversion and/or conversion products are removed from the surface.

In the carbonation reaction the CO₂ partial pressure is adjusted to range, for example, from 0.5 bar to 100 bar, preferably from 1 bar to 90 bar, in particular from 2 bar to 40 bar.

In a preferred embodiment step iii) is performed at a concentration of CO₂ from 5 Vol.-% to 100 Vol.-%, especially from 20 Vol.-% to 80 Vol.-%.

The carbon dioxide and the thermally activated material are preferably used in the carbonation reaction, i.e. step iii), in a molar ratio in the range from 0.2 to 20 moles and preferably in the range from 1 to 10 moles.

The carbonation in step ii) is preferably carried out at a temperature in the range of from 20 °C to 200 °C, preferably from 50 °C to 180 °C.

The carbonation time in step ii) is preferably in the range of 1 to 48 h, especially 4 to 24 h.

Carbonation in the sense of the invention does not encompass natural carbonation under atmospheric conditions with naturally occurring CO₂ by contact with air.

The product obtained in step iii) is a supplementary cementitious material comprising a higher amount of pozzolanic phases than products made from the same starting material by carbonation without hydrothermal treatment. The SCM obtained according to the invention can be dried or used directly as a slurry.

Further, the supplementary cementitious material obtained in step iii) can be ground to adjust the particle size distribution. Preferably, the supplementary cementitious material has a particle size distribution with a D₉₀ of ≤ 500 µm, more preferred ≤ 200 µm, especially preferred ≤ 100 µm, determined by laser granulometry. The supplementary cementitious material obtained in step iii) preferably has a particle size distribution with a D₉₀ from 10 µm to 500 µm, more preferably from 10 µm to 200 µm, especially from 25 µm to 90 µm. In a preferred embodiment, the supplementary cementitious material has a Rosin-Rammler slope n in the range from 0.6 to 1.4, especially from 0.7 to 1.2.

In one preferred embodiment, the method according to the invention comprises an additional sulfurization step iv). Methods for sulfurization are known by a skilled person. Usually, sulfurization iv) of the supplementary cementitious material obtained in step iii) is performed by adding solid or dissolved sulfate salts, especially calcium and alkali sulfates including hydrogensulfates and the forms with or without chemically bound water are suitable.

A further embodiment of the invention is the supplementary cementitious material obtainable by the method defined above. In contrast to products made from the same starting material by carbonation without hydrothermal treatment the SCM according to the invention contains a higher amount of silica phases, alumina phases, and/or silica-alumina phases which have pozzolanic reactivity. Further, it contains a substantial amount of very fine limestone precipitated during carbonation. The carbonation in the autoclave results in a carbonation of the hydrates only, since carbonation is a much faster reaction than hydration. When comparing a material hydrothermally treated and subsequently carbonated with a material concurrently hydrothermally treated and carbonated, the first one will contain more pozzolanic Al and Si. This is revealed by a higher portlandite consumption during carbonation.

A further embodiment of the invention is the use of the supplementary cementitious material obtainable by the method for making hydraulic building materials, preferably composite binders, concrete, mortar, screed or tile adhesive, in particular composite binder or concrete. The SCM according to the invention can be used like known SCMs, i.e. for all uses where known SCMs like fly ash, ground granulated blast furnace slag, calcined clay etc. are used and in the same way. Taking into account the high reactivity of the SCM according to the invention, the clinker replacement levels may be higher.

Preferably, the supplementary cementitious material according to the invention can be used as main component, e.g. in an amount from 36 to 95 % by weight, in a composite binder. In another preferred embodiment the supplementary cementitious material according to the invention can be used as minor component, e.g. in an amount from 6 to 35 % by weight, in a composite binder. The supplementary cementitious material according to the invention can also be used as addition for concrete and mortar, i.e. be added during making the wet mixture instead of being dry-mixed or pre-mixed with the cement.

A further embodiment of the invention is a hydraulic binder comprising a cement and the supplementary cementitious material as defined above and obtainable by the use and method as defined above. The cement is preferably selected from Portland cement, Portland composite cement, calcium sulfoaluminate cement, calcium aluminate cement and dicalcium silicate cement. Preferred cements are Portland cements according to DIN-EN 197-1, calcium sulfoaluminate cement and calcium aluminate cement. Especially preferred are Portland cements according to DIN EN 197-1.

In a preferred embodiment the hydraulic binder comprises, based on the total weight of the hydraulic binder, 1 to 88 % by weight supplementary cementitious material as defined above, and 22 to 99 % by weight cement as defined above. The binder may also contain additional components, e.g. additives and/or admixtures, wherein the amount of cement and SCM is less than 100 % and all component amounts add up to 100 %.

For use, the hydraulic binder is transformed, e.g. into mortar or concrete, by mixing with water. Typically, a water to binder weight ratio (w/b) from 0.1 to 1, preferably from 0.15 to 0.75, and more preferred from 0.35 to 0.65 is used. The SCM according to the invention and - if applicable one or more further SCMs that are optionally added - are included into the amount of binder for calculating the w/b ratio. The mortar or concrete usually also contains aggregates as well as optionally admixtures and/or additives. Admixtures and additives are agents for improving or adjusting properties of the composite cement mentioned before which can also be added already to the starting material subjected to hydrothermal treatment or to the hydrothermally activated material subjected to carbonation.

Admixtures are used to optimize the properties like setting time, hardening time, spread, viscosity and homogeneity of the hydraulically hardening building material as well as to impart desired properties to the final building structure, e.g. hardened concrete part, like strength, flexural modulus, freeze-thaw-resistance and many more. These admixtures are known per se and are used in their usual amounts. Admixtures like water reducing agents, plasticizers and super plasticizers to adjust consistency while keeping the w/b ratio in the suitable range are preferably admixtures. Useful water reducing agents, plasticizers and super plasticizers are for example, but not exclusively, organic compounds with one or more functional group selected from carboxylate, sulfonate, phosphonate, phosphate or alcohol functional groups. Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides). Furthermore, it is possible to use admixtures that improve the concrete durability performance like air entrains or hydrophobic agents. Admixtures can also be added to the binder, if they are dry substances.

Often, also additives are contained. Usual are glass fibres, waste glass, polymer fibres, cement kiln dust, silica fume, pigments, for example. One or more of them can be used in the usual amount. Additives are often added to the composite cement forming a binder, since most are dry substances.

A further embodiment of the invention is the use of the hydraulic binder as defined above for making hydraulic building materials. Therein, the binder is mixed with water and typically also aggregate as well as optionally admixtures and/or additives in a manner known per se and as described above.

A further embodiment of the invention is a hydraulic building material, such as concrete or mortar, comprising the supplementary cementitious material or hydraulic binder as defined above.

The invention will be illustrated further with reference to the examples that follow, without restricting the scope to the specific embodiments described. The invention includes all combinations of described and especially of preferred features that do not exclude each other.

If not otherwise specified, any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example

Several synthetic recycled concrete pastes (RCP) with different fines' mineralogy were produced by mixing a commercial Portland cement CEM I 42.5 R with crushed aggregate to prepare mortars (w/b: 0.45 and cement:aggregate weight ratio 1:1). The mortars were hydrated for 3 months at 40 °C and subsequently stored at 20 °C for 9 months. The following aggregates were used to prepare the mortars:
"Q" with quartz aggregate,
"L" with Limestone aggregate, and
"G" with Granite aggregate.

The hardened mortars were dried at 105°C and ground with a target D₉₀ of 60 µm to provide a starting material comprising hydrated cement and aggregate. For these, the qualitative mineralogical composition was analysed by X-ray diffraction analyses (XRD) and thermogravimetric analyses (TG). The amount of the X-ray amorphous and poorly crystalline/microcrystalline phases was estimated from the presence and intensity of a broad amorphous hump also referred to as halo from the X-ray diffraction patterns. The analyses were further supplemented by attenuated total reflectance Fourier-transformed infrared spectroscopy (ATR-FT-IR).

The composition of the starting materials, i.e. the mortars after hydration, as determined with XRD and TG is summarized in table 1.

**Table 1**

| sample | bound H₂O (%, TG) | Ca(OH)₂ (%, TG) | CaCO₃ (%, TG) | Main Phases (XRD) |
|---|---|---|---|---|
| Q | 13.8 | 11.2 | 7.6 | Quartz (from aggregates), Amorphous, Portlandite, Ettringite, AFm, Calcite |
| L | 13.6 | 11.7 | 45.3 | Carbonates (calcite and dolomite), Amorphous, Portlandite, Ettringite, AFm |
| G | 13.6 | 11.5 | 7.2 | Feldspar, Muscovite, Quartz (from aggregates), Amorphous, Portlandite, Ettringite, AFm |

These starting materials were autoclaved at 200 °C, w/s equal to 2, for 16 hours. Then the samples were dried, ground (D₉₀ = 100 µm) and carbonated for 6 hours. The conditions were 100 Vol.-% CO₂ with a gas flow of 100 I/h, a w/s of 10 in 0.1 M Na₂SO₄ solution, at 20 °C, and ambient pressure. After carbonation, the products were de-agglomerated and dried at 105 °C to provide the SCM.

From the obtained SCM, i.e. the autoclaved and carbonated materials, synthetic mixes were prepared from 70 % by weight SCM, 29 % by weight portlandite and 1 % by weight NaOH to measure the pozzolanic reactivity. The pastes were prepared with a water solids weight ratio of 0.55 and the heat evolution was measured with calorimetry testing for 7 days at 20 °C. Then the hydration was stopped.

The products (SCM) and hardened pastes as well as the hydrothermally activated materials were analysed with TG, FT-IR, and XRD. The PSD was measured for the SCM and for the starting materials. The results are illustrated in the figures and discussed below. In the figures:
Figure 1 shows the pH evolution measured for samples of the autoclaved and carbonated samples mixed with water at a w/s (water/solid) of 10.
Figure 2 shows FT-IR spectra of two starting materials, the hydrothermally activated material of them and the SCM obtained by carbonation,
Figure 3 shows the particle size distribution of the ground starting material and the SCM obtained by autoclaving and carbonation,
Figure 4 shows calorimetry data of pastes from the SCM and cement, and
Figure 5 shows FT-IR spectra of the SCM and hardened pastes from the SCM and cement for two SCM.

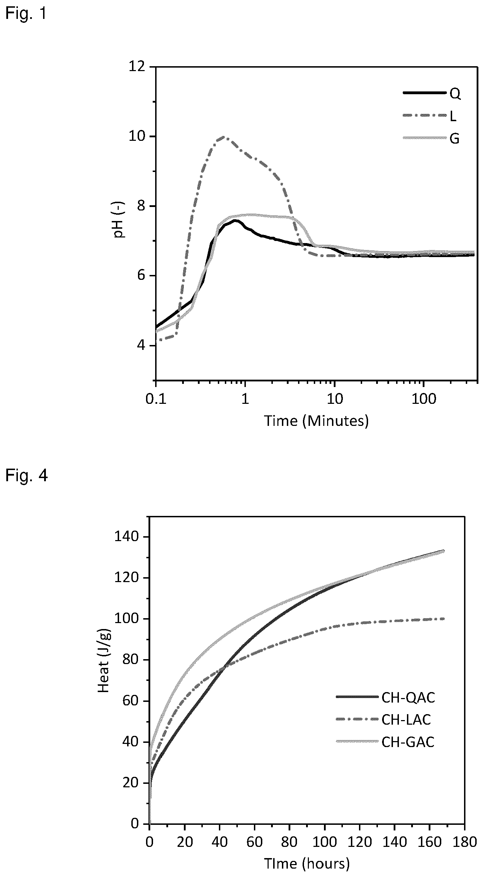

Figure 1 indicates that the reactions occurring during autoclaving had impact on the carbonation reaction. For the samples Q and G the early increase of the pH was significantly lower when compared to the comparative L mortars. The increase of the pH is associated with the dissolution of calcium rich hydrates and a fast consumption of CO₂ dissolved in the solution. The lower increase resulted from the formation of lower Ca/Si hydrates in Q and G binders that are known to react slower with carbonates.

One notes that the evolution of the pH of the remaining hydrothermally treated samples is similar to the cements hydrated at normal conditions indicating that the wet carbonation mechanisms are universal.

After the autoclaving, the composition of the materials changed considerably. The composition is summarized in table 2. Most of the hydrates are decomposed and new phases are formed. These include mainly the partially crystalline hydrothermal C-S-H phases like α-C₂SH, Tobermorite, Scawtite, Dellaite, Hillebrandite. Still, the content of the XRD amorphous phase is significant. Furthermore, a formation of hydrogarnets (Katoite) is observed. This phase binds alumina, iron and small amounts of silica. Note that at the conditions applied, no asbestos was supposed to form. This was confirmed by the analyses, where no traces of this phase were found. It is noticeable that portlandite was consumed during hydrothermal activation (autoclaving) in the case of the starting materials from mortars Q and G with quartz and granite aggregate, respectively. These aggregates reacted with calcium ions to form hydrates. Analysing the changes of the mineral composition of the aggregates indicates that especially Feldspars and Quartz are hydrothermally reactive at the conditions used in the example, as illustrated by the formation of Tobermorite that is characterized by low Ca/Si ratio equal to ~ 0.8. In the case of the mortar with limestone aggregate (L) a smaller amount of portlandite consumption is observed. Thus, limestone did not react, the observed change in portlandite content was negligible and can be assigned to a crystallization of other phases causing an increase in total mass.

**Table 2:**

| sample | bound H₂O (%, TG) | Ca(OH)₂ (%, TG) | CaCO₃ (%, TG) | Main Phases (QXRD) |
|---|---|---|---|---|
| Q | 8.9 | - | 4.2 | Quartz (from aggregates), Hydrothermal C-S-H (Scawtite and Tobermorite), Amorphous, Katoite, Vaterite |
| L | 8.6 | 10.5 | 46.7 | Calcite, Hydrothermal C-S-H (mainly α-C₂SH, Dellaite, Killalaite and Hillebrandite), Amorphous, Katoite Portlandite |
| G | 7.0 | - | 7.0 | Muscovite (from aggregates), Hydrothermal C-S-H (mainly Scawtite and Tobermorite α-C₂SH,Dellaite, Killaite, Hillebrandite and Rosenhahnite), Amorphous, Katoite, Calcite, Aragonite |

After the carbonation, the composition had changed again. Most of the C-S-H phase and the remaining portlandite were decomposed while XRD amorphous phases formed. Furthermore, significant amounts of calcium carbonate precipitated indicating the high carbonation degree of the hydrothermally activated material. The carbonation degree was similar among the investigated samples, indicating that the hydrothermal treatment has little impact on the extent and progress of the carbonation reaction. The compositions of the SCM are summarized in table 3.

**Table 3**

| sample | bound H₂O (%, Tg) | Ca(OH)₂ (%, Tg) | CaCO₃ (%, Tg) | Main Phases (XRD) |
|---|---|---|---|---|
| Q | 7.2 | - | 46.9 | Quartz (from aggregates), Vaterite and Calcite |
| L | 5.3 | - | 86.2 | Calcite, Hydrothermal C-S-H, Amorphous, Katoite |
| G | 5.4 | - | 45.1 | Feldspar, Muscovite, Quartz (from aggregates), Calcite, Vaterite, Hydrothermal C-S-H, Amorphous, Katoite |

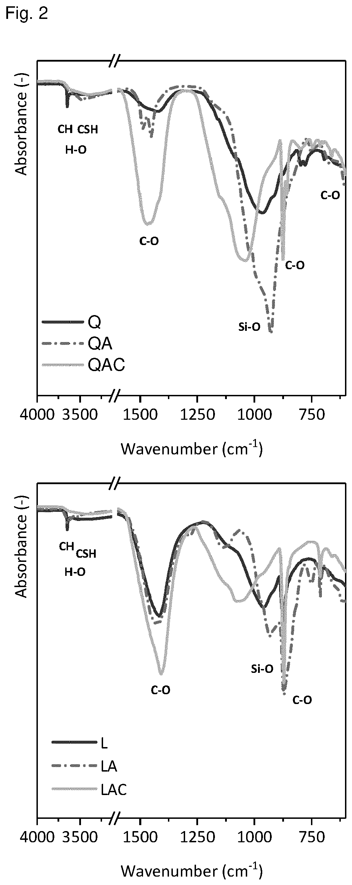

FT-IR data (Figure 2) provide information about the transformations of the calcium silicate phases during the autoclaving and carbonation process. The FT-IR spectra of the SCM (after autoclaving and carbonation) were characterized by a large signal between 800 and 1200 cm⁻¹ which is associated with vibrations of Si-O bonds. A peak at about 960 cm⁻¹, corresponding to the asymmetric stretching vibration of Si-O bonds in the Q² units of the C-S-H gel, was found in the starting material. After the autoclaving, the peak was at ~ 930 cm⁻¹ which is associated with the hydrothermal C-S-H phase. The position of this peak moved with the progress of carbonation associated with the carbonation-induced decalcification of the C-S-H phase and the formation of alumina-silica gel. While during carbonation of hydrated cements without prior hydrothermal treatment the position of the peak was close to 1040 cm⁻¹, the position further decreased to 1080 cm⁻¹ here. This indicates some modification of the gel formed from the hydrothermally activated material. Note that the carbonation conditions were the same.

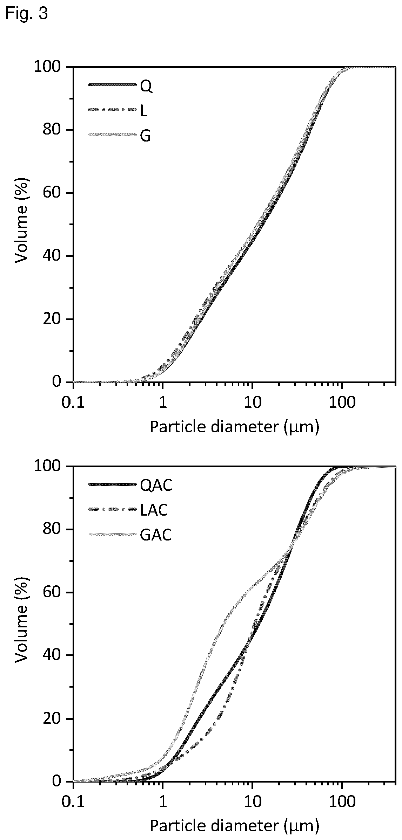

The particle size distribution of the starting material for the autoclaving process is shown in figure 3. All investigated samples were characterized by the same particle size distribution. However, after the autoclaving and carbonation, the particle size distribution was modified for samples Q and G. The origin of this phenomenon is currently not recognized.

The pozzolanic reactivity of the materials after hydrothermal treatment and after both, hydrothermal treatment and carbonation, was investigated. For this, the autoclaved and/or carbonated materials were mixed with portlandite and an activator (NaOH) to mimic the conditions in a composite cement paste. The pozzolanic reaction occurs according to the simplified equation:

Al-Si-gel + CH → C-S(A)-H + AFm

In this reaction the calcium aluminate phases react with portlandite to from mainly C-S-H phase. Additionally, AFm phases may form if the gel contains significant amounts of alumina. The progress of the reaction is proportional to the portlandite consumption which was measured and is given in table 4.

**Table 4**

| sample | consumed Ca(OH)₂ after autoclaving | consumed Ca(OH)₂ after autoclaving and carbonation |
|---|---|---|
| Q | 6 % | 100 % |
| L | 4 % | 58 % |
| G | 13 % | 88 % |

The autoclaving alone did not promote a significant pozzolanic reaction in all the investigated samples. In the mixes Q and G containing autoclaved and carbonated material, i.e. SCM according to the invention, the consumption of portlandite is about 60 % by weight. L was a reference sample in this set of the experiments since the limestone aggregate used cannot improve the pozzolanic properties as the limestone aggregates do not react with CO₂. Samples from starting material containing olivine aggregate had similar consumption of portlandite as the limestone aggregate sample. The consumption of portlandite was slightly higher for basalt and significantly higher in the case of samples with quartz and granite aggregate. This confirms the hydrothermal activation of those aggregates.

Calorimetry data shown in Figure 4 indicate that the samples from autoclaved and carbonated materials were reacting rapidly. However, the shape of the curves indicates that the reactions were not complete after 7 days.

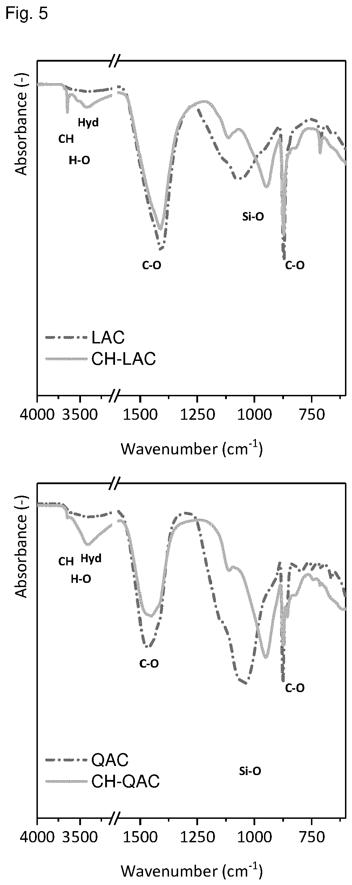

The FT-IR spectra (Figure 5) indicate the transformation of the Al-Si gel into a C-S-H phase for the hydrated samples. The main position of the Si-O vibration moved from 1040 - 1080 cm⁻¹ to ~ 950 cm⁻¹. This was associated with a binding of significant amounts of the water, typical for hydrates.

Thus, hydrothermal treatment of waste concrete allows to transform a higher amount of the material into SCM by carbonation and thereby provides more reactive SCM. This enables further saving of natural raw materials and reduction of CO₂ emission for the production of binders. Less effort is needed to detach RCP from aggregate and/or to separate RCF from RCA.

## Claims

1. A method for producing a supplementary cementitious material comprising the steps
i) providing a starting material comprising hydrated cement and aggregate comprising silicates and/or alumino-silicates,
ii) hydrothermal treatment of the starting material provided in step i) to obtain a hydrothermally activated material wherein also the aggregate is at least partially activated so that the hydrothermally activated material contains more carbonatable hydrate phases than the amount of recycled concrete paste that was present in the starting material,
iii) subsequent carbonation of the hydrothermally activated material of step ii) to provide the supplementary cementitious material.

2. The method according to claim 1, wherein the hydrated cement and aggregate is obtained from waste concrete, preferably from recycled concrete fines.

3. The method according to claim 1 or 2, wherein the aggregate comprises crystalline or amorphous silicates, alumino-silicates or mixtures thereof.

4. The method according to anyone of the preceding claims, wherein the aggregate comprises quartz, basalt, granite, olivine and/or skarn.

5. The method according to anyone of the preceding claims, wherein water is added to the starting material obtained in step i), wherein a water-solid weight ratio is equal to or larger than 0.1.

6. The method according to anyone of the preceding claims, wherein the starting material provided in step i) has a particle size distribution determined by laser granulometry with a D₉₀ ≤ 500 µm, preferably D₉₀ ≤ 200 µm, especially preferred D₉₀ ≤ 100 µm.

7. The method according to anyone of the preceding claims, wherein the hydrothermal treatment in step ii) is carried out at a temperature in the range from 25 °C to 400 °C and/or at a pressure in the range from 1 bar to 25 bar and/or at a water-solid ratio from 0.2 to 4 and/or for 30 minutes to 48 hours.

8. The method according to anyone of the preceding claims, wherein the carbonation in step iii) is carried out at a temperature in the range from 20 °C to 200 °C and/or at a pressure in the range from 0.5 bar to 100 bar.

9. The method according to anyone of the preceding claims, comprising an additional step iv) of sulfurization of the supplementary cementitious material obtained in step iii).

10. A supplementary cementitious material obtainable by the method defined in anyone of claims 1 to 9.

11. Use of the supplementary cementitious material obtainable by the method defined in anyone of claims 1 to 9 or according to claim 10 for making hydraulic building materials, preferably composite binders, concrete, mortar, screed or tile adhesive, in particular composite binder or concrete.

12. A hydraulic binder comprising the supplementary cementitious material obtainable by the method defined in anyone of claims 1 to 9 or according to claim 10 and a cement, preferably selected from Portland cement, calcium sulfoaluminate cement and calcium aluminate cement.

13. The hydraulic binder according to claim 12 comprising, based on the total weight of the hydraulic binder, 1 to 88 % by weight supplementary cementitious material and 22 to 99 % by weight cement.

14. A use of the hydraulic binder according to claim 12 or 13 for making hydraulic building materials, preferably composite binders, concrete, mortar, screed or tile adhesive, in particular composite binder or concrete.

## Patentansprüche

1. Verfahren zur Herstellung eines Klinkerersatzmaterials, umfassend die Schritte
i) Bereitstellen eines Ausgangsmaterials umfassend hydratisierten Zement und Gesteinskörnung, die Silikate und/oder Aluminiumsilikate enthält,
ii) hydrothermale Behandlung des in Schritt i) bereitgestellten Ausgangsmaterials, um ein hydrothermal aktiviertes Material zu erhalten, wobei auch die Gesteinskörnung zumindest teilweise aktiviert wird, so dass das hydrothermal aktivierte Material mehr karbonatisierbare Hydratphasen enthält als die Menge an recyceltem Zementstein, die im Ausgangsmaterial vorhanden war,
iii) anschließende Karbonatisierung des hydrothermal aktivierten Materials aus Schritt ii), um das Klinkerersatzmaterial bereitzustellen.

2. Verfahren gemäß Anspruch 1, wobei der hydratisierte Zement und die Gesteinskörnung aus Betonabfällen, vorzugsweise aus recycelten Betonfeinstoffen, erhalten werden.

3. Verfahren gemäß Anspruch 1 oder 2, wobei die Gesteinskörnung kristalline oder amorphe Silikate, Aluminiumsilikate oder Mischungen davon umfasst.

4. Verfahren gemäß einem der vorhergehenden Ansprüche, wobei die Gesteinskörnung Quarz, Basalt, Granit, Olivin und/oder Skarn umfasst.

5. Verfahren gemäß einem der vorhergehenden Ansprüche, wobei dem in Schritt i) erhaltenen Ausgangsmaterial Wasser zugesetzt wird, wobei ein Wasser-Feststoff-Gewichtsverhältnis gleich oder größer als 0,1 ist.

6. Verfahren gemäß einem der vorhergehenden Ansprüche, wobei das in Schritt i) bereitgestellte Ausgangsmaterial eine durch Lasergranulometrie bestimmte Partikelgrößenverteilung mit einem D₉₀ ≤ 500 µm, vorzugsweise D₉₀ ≤ 200 µm, besonders bevorzugt D₉₀ ≤ 100 µm aufweist.

7. Verfahren gemäß einem der vorhergehenden Ansprüche, wobei die hydrothermale Behandlung in Schritt ii) bei einer Temperatur im Bereich von 25 °C bis 400 °C und/oder bei einem Druck im Bereich von 1 bar bis 25 bar und/oder bei einem Wasser-Feststoff-Verhältnis von 0,2 bis 4 und/oder für 30 Minuten bis 48 Stunden durchgeführt wird.

8. Verfahren gemäß einem der vorhergehenden Ansprüche, wobei die Karbonatisierung in Schritt iii) bei einer Temperatur im Bereich von 20 °C bis 200 °C und/oder bei einem Druck im Bereich von 0,5 bar bis 100 bar durchgeführt wird.

9. Verfahren gemäß einem der vorhergehenden Ansprüche, umfassend einen zusätzlichen Schritt iv) der Schwefelung des in Schritt iii) erhaltenen Klinkerersatzmaterials.

10. Klinkerersatzmaterial, erhältlich durch das Verfahren gemäß einem der Ansprüche 1 bis 9.

11. Verwendung des Klinkerersatzmaterials erhältlich durch das Verfahren gemäß einem der Ansprüche 1 bis 9 oder gemäß Anspruch 10 zur Herstellung von hydraulischen Baumaterialien, vorzugsweise Kompositbindemitteln, Beton, Mörtel, Estrich oder Fliesenkleber, insbesondere Kompositbindemitteln oder Beton.

12. Hydraulisches Bindemittel, umfassend das gemäß einem der Ansprüche 1 bis 9 oder gemäß Anspruch 10 erhältliche Klinkerersatzmaterial und einen Zement, vorzugsweise ausgewählt aus Portlandzement, Calciumsulfoaluminatzement und Calciumaluminatzement.

13. Hydraulisches Bindemittel gemäß Anspruch 12, umfassend 1 bis 88 Gew.-% Klinkerersatzmaterial und 22 bis 99 Gew.-% Zement bezogen auf das Gesamtgewicht des hydraulischen Bindemittels.

14. Verwendung des hydraulischen Bindemittels gemäß Anspruch 12 oder 13 zur Herstellung von hydraulischen Baumaterialien, vorzugsweise Kompositbindemitteln, Beton, Mörtel, Estrich oder Fliesenkleber, insbesondere Kompositbindemitteln oder Beton.

## Revendications

1. Procédé de production de matériau cimentaire supplémentaire comprenant les étapes suivantes:
i) fourniture d'un matériau de départ comprenant du ciment hydraté et de granulat comprenant des silicates et/ou des aluminosilicates,
ii) traitement hydrothermique du matériau de départ fourni dans l'étape i) afin d'obtenir un matériau hydrothermiquement activé, dans lequel également le granulat est au moins en partie activé de sorte que le matériau hydrothermiquement activé contient davantage de phases d'hydrate apte à être carbonaté que la quantité de pâte de béton recyclée qui était présente dans le matériau de départ,
iii) carbonatation subséquente du matériau hydrothermiquement activé de l'étape ii) afin de fournir le matériau cimentaire supplémentaire.

2. Procédé selon la revendication 1, dans lequel le ciment hydraté et le granulat sont obtenus à partir de déchets de béton, de préférence à partir de fines de béton recyclées.

3. Procédé selon la revendication 1 ou la revendication 2, dans lequel le granulat comprend des silicates cristallins ou amorphes, des aluminosilicates ou des mélanges de ceux-ci.

4. Procédé selon l'une quelconque des revendications précédentes, dans lequel le granulat comprend du quartz, du basalte, du granit, de l'olivine et/ou du skarn.

5. Procédé selon l'une quelconque des revendications précédentes, dans lequel de l'eau est ajoutée au matériau de départ obtenu dans l'étape i), dans lequel un rapport pondéral eau-solide est égal ou supérieur à 0,1.

6. Procédé selon l'une quelconque des revendications précédentes, dans lequel le matériau de départ fourni dans l'étape i) a une distribution granulométrique déterminée par granulométrie laser avec un D₉₀ ≤ 500 µm, de préférence D₉₀ ≤ 200 µm, de manière spécialement préférée D₉₀ ≤ 100 µm.

7. Procédé selon l'une quelconque des revendications précédentes, dans lequel le traitement hydrothermique dans l'étape ii) est mené à une température comprise dans la gamme allant de 25 °C à 400 °C et/ou à une pression comprise dans la gamme allant de 1 bar à 25 bar et/ou à un rapport eau-solide allant de 0,2 à 4 et/ou pendant une durée allant de 30 minutes à 48 heures.

8. Procédé selon l'une quelconque des revendications précédentes, dans lequel la carbonatation dans l'étape iii) est menée à une température comprise dans la gamme allant de 20 °C à 200 °C et/ou à une pression comprise dans la gamme allant de 0,5 bar à 100 bar.

9. Procédé selon l'une quelconque des revendications précédentes, comprenant une étape additionnelle iv) de sulfuration du matériau cimentaire supplémentaire obtenu dans l'étape iii).

10. Matériau cimentaire supplémentaire pouvant être obtenu par le procédé défini dans l'une quelconque des revendications 1 à 9.

11. Utilisation du matériau cimentaire supplémentaire pouvant être obtenu par le procédé défini dans l'une quelconque des revendications 1 à 9 ou selon la revendication 10 pour fabriquer des matériaux de construction hydrauliques, de préférence des liants composites, du béton, du mortier, un adhésif pour chapes ou carreaux, en particulier un liant composite ou du béton.

12. Liant hydraulique comprenant le matériau cimentaire supplémentaire pouvant être obtenu par le procédé défini dans l'une quelconque des revendications 1 à 9 ou selon la revendication 10 et un ciment, de préférence sélectionné parmi un ciment Portland, un ciment de type sulfoaluminate de calcium et un ciment de type aluminate de calcium.

13. Liant hydraulique selon la revendication 12 comprenant, rapporté au poids total du liant hydraulique, de 1 à 88 % en poids de matériau cimentaire supplémentaire et de 22 à 99 % en poids de ciment.

14. Utilisation du liant hydraulique selon la revendication 12 ou la revendication 13 pour fabriquer des matériaux de construction hydrauliques, de préférence des liants composites, du béton, du mortier, un adhésif pour chapes ou carreaux, en particulier un liant composite ou du béton.
